# EUROPÄISCHE PATENTSCHRIFT

(11) **EP 1 000 449 B1**
(45) Veröffentlichungstag und Bekanntmachung des Hinweises auf die Patenterteilung: **19.09.2001**
(21) Anmeldenummer: 98948756.6
(22) Anmeldetag: 30.07.1998
(51) Int. Cl.: H02B 13/045

(54) **DURCHFÜHRUNGSSTÜTZER FÜR METALLGEKAPSELTE, LUFTISOLIERTE MITTELSPANNUNGS-SCHALTANLAGE**
FEEDTHROUGH POST INSULATOR FOR AN AIR-INSULATED METAL-ENCAPSULATED MIDDLE VOLTAGE SWITCHING STATION
ISOLATEURS RIGIDES DE TRAVERSEE POUR INSTALLATION DE DISTRIBUTION MOYENNE TENSION ISOLEE PAR AIR, SOUS ENVELOPPE METALLIQUE

(30) Priorität: 31.07.1997 DE 29714254 U
(43) Veröffentlichungstag der Anmeldung: 17.05.2000
(73) Patentinhaber: SIEMENS AKTIENGESELLSCHAFT, 80333 München (DE)
(72) Erfinder: KOPKE, Volker, D-91054 Bükenhof (DE); SCHUDT, Karl, D-61203 Reichelsheim (DE); BISCHUR, Olaf, D-63762 Grossostheim (DE); MOSLER, Thomas, D-60594 Frankfurt (DE); DÄUMLING, Holger, D-22885 Barsbüttel (DE); STOLZ, Rainer, D-63477 Maintal (DE)
(86) Internationale Anmeldenummer: DE9802287
(87) Internationale Veröffentlichungsnummer: WO9907046

(56) Entgegenhaltungen:
- EP-A- 0 005 208
- DE-A- 2 504 499
- DE-A- 19 502 061

## Beschreibung

Die Anmeldung betrifft eine metallgekapselte, luftisolierte Mittelspannungs-Schaltanlage mit einer der Anzahl von Phasen entsprechenden Zahl von Durchführungsstützern mit Sammelschienenanschlüssen, wobei die Durchführungsstützer mit einem Stützer-Trageblech lösbar verbunden sind.

In der eingangs definierten metallgekapselten, luftisolierten Mittelspannungs-Schaltanlage dienen die Durchführungsstützer zur Herstellung der elektrischen Verbindung zwischen den Sammelschienen und den Schaltgeräten innerhalb der Mittelspannungs-Schaltanlage. Gleichzeitig dienen die Durchführungsstützer zur Abstützung der Sammelschienenanschlüsse, die aufgrund der konstruktiven Ausgestaltung und ihrer Strombelastung im Betriebszustand entsprechend mechanischen Belastungen ausgesetzt sind.
Durchführungsstützer dieser Art sind aus der DE 25 04 499 A bekannt. Sie durchdringen hier einen rohrförmigen Gehäusekörper der Schaltanlage und werden an diesem Gehäusekörper durch die die Durchführungsstützer umgebenen Durchführungsisolatoren abgestützt. Wegen der maßlich eng tolerierten Zuordnung innerhalb der Schaltanlage sind entsprechend aufwendige konstruktive Maßnahmen erforderlich bzw. muß die Möglichkeit eines Toleranzausgleichs durch nachträglichen Justieraufwand gegeben sein.
Die der Erfindung zugrundeliegende Aufgabe besteht darin, eine schaltanlage an definieren die mit einem Durchführungsstützer versehen ist, der den mechanischen Beanspruchungen der Sammelschiene in allen Betriebszuständen entspricht und außerdem die Konstruktion dieser Durchführungsstützer erheblich zu vereinfachen, ohne jedoch die in dieser Technik üblichen Sicherheitsanforderungen einzuschränken.
Erfindungsgemäß wird dies durch die Merkmale
1.1 der Durchführungsstützer weist eine quaderförmige Stützer-Außenkontur auf, an der sich eine ebenfalls quaderförmige Stützer-Innenkontur anschließt,
1.2 zwischen der Sfcützer-Außenkontur und der Stützer-Innenkontur ist ein Stützer-Klemmschlitz mit einer konzentrischen querschnittskontur vorgesehen,
1.3 die Stützer-Innenkontur weist im Anlagebereich zum Stützer-Trageblech eine Stützer-Führungskontur auf, die durch eine Ausnehmung des Stützer-Trageblechs hindurch führt und zum freien Bereich hin mit der von der Stützer-Außenkontur abgewandten Längsfläche trapezförmig verjüngt ist,
1.4 der Stützer-Innenkontur schließt sich ein quaderförmiger Hohlkörper an, der im Bereich des Sammelschienenanschlusses mit einem zur Längsrichtung desselben rechtwinklig angeordneten T-förmigen Anschlußhohlkörper verbunden ist,
1.5 der T-förmige Anschlußhohlkörper ist im entgegengesetzten Bereich des Sammelschienenanschlusses mit einer die Kontur desselben überragenden Befestigungsplatte ausgestattet,
1.6 der Sammelschienenanschluß weist eine zur Längsrichtung des quaderförmigen Hohlkörpers rechtwinklig angeordnete gradlinige Außenkontur mit einer Zwei- bzw. Dreipunktbefestigung auf, erfüllt.

Zwischen der quaderförmigen Stützer-Außenkontur, an der sich die ebenfalls quaderförmige Stützer-Innenkontur anschießt, ist der Stützer-Klemmschlitz vorgesehen, in den nach dem Einbau des Durchführungsstützers in die Mittelspannungs-Schaltanlage ein Blendenblech eingeschoben wird. Mit dem beipielsweise von oben her einschiebbaren Blendenblech sind die im allgemeinen nebeneinander eingebauten Durchführungsstützer in besonderer Weise zueinander lagefixiert. Mit der konzentrischen Querschnittskontur innerhalb des Stützer-Klemmschlitzes werden weite Bereiche der Stützer-Außenkontur bzw. der Stützer-Innenkontur von den Blendenblech überdeckt. Damit ist eine besonders kompakte Einbauweise der Durchführungsstützer innerhalb der Mittelspannungs-Schaltanlage erreicht. Diesem Zweck dient darüber hinaus auch die Stützer-Führungskontur, die mit der nach außen hin sich verjüngenden Längsfläche mit dem Eingriff in das Stützer-Trageblech praktisch selbstzentrierend lagefixiert ist. Die Stützer-Führungskontur dient beispielsweise auch zum Herausführen von Leitungen aus dem Niederspannungsbereich und zur kapazitiven Anzeige vorhandener Ströme in der Mittelspannungs-Schaltanlage. Mit dem sich aus der Kombination des quaderförmigen Hohlkörpers mit dem T-förmigen Anschlußhohlkörper ergebenden Abstand ist der Durchführungsstützer mit seiner Befestigungsplatte auf dem Stützer-Trageblech auch hinsichtlich auftretender Querkräfte ausreichend lagegesichert.
Mit der stromabhängigen Zwei- bzw. Dreipunktbefestigung der Sammelschiene auf dem Sammelschienenanschluß ist ebenfalls eine Optimierung des Sammelschienenanschlusses hinsichtlich auftretender Querkräfte erreicht.

Gemäß einer vorteilhaften Ausgestaltung der Erfindung sind die Merkmale
2.1 die Stützer-Innenkontur ist im Bereich des angrenzenden quaderförmigen Hohlkörpers gegenüberliegend der Stützer-führungskontur mit einer Halbrundkontur versehen,
2.2 die Halbrundkontur ist mit einer trapezförmig ausgestalteten Stützeinrichtung versehen, die annähernd höhengleich ist mit dem T-förmigen Anschlußhohlkörper,
2.3 die Stützer-Innenkontur weist einen quer zur Längsrichtung des quaderförmigen Hohlkörpers in der Ebene des Stützer-Trageblechs angeordneten Befestigungswinkel auf, vorgesehen.

Mit der Halbrundkontur des quaderförmigen Hohlkörpers im oberen Bereich bildet die trapezförmig ausgestaltete Stützeinrichtung in einfacher Weise einen zusätzlichen Halt für die darüber montierte Sammelschiene. Mit dem in der Ebene des Stützer-Tragebleches angeordneten Befestigungswinkel, der quer zur Längsrichtung des quaderformigen Hohlkörpers angeordnet ist, ist der Durchführungsstützer innerhalb der Mittelspannungs-Schaltanlage in einfacher Weise lösbar zu befestigen.

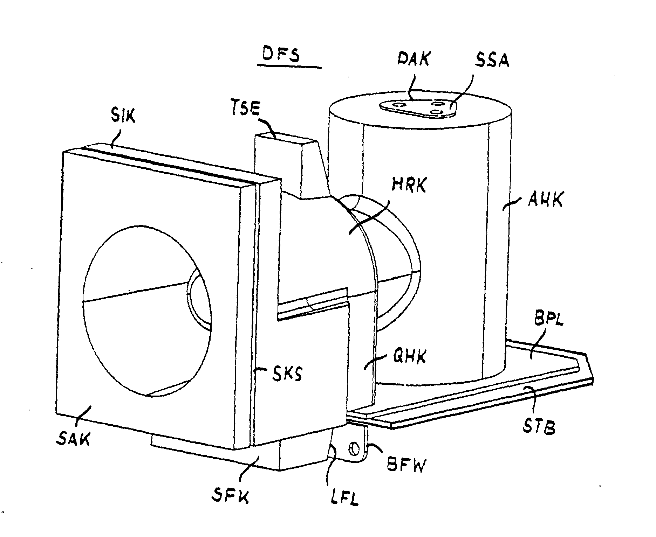

## Patentansprüche

1. Metallgekapselte, luftisolierte Mittelspannungs-Schaltanlage mit einer der Anzahl von Phasen entsprechenden Zahl von Durchführungsstützern mit Sammelschienenanschlüssen, wobei die Durchführungsstützer mit einem Stützer-Trageblech lösbar verbunden sind,
**gekennzeichnet durch** die Merkmale
1.1 der Durchführungsstützer (DFS) weist eine quaderförmige Stützer-Außenkontur (SAK) auf, an der sich eine ebenfalls quaderförmige Stützer-Innenkontur (SIK) anschließt,
1.2 zwischen der Stützer-Außenkontur (SAK) und der Stützer-Innenkontur (SIK) ist ein Stützer-Klemmschlitz (SKS) mit einer konzentrischen Querschnittskontur vorgesehen,
1.3 die Stützer-Innenkontur (SIK) weist im Anlagebereich zum Stützer-Trageblech (STB) eine Stützer-Führungskontur (SFK) auf, die durch eine Ausnehmung des Stützer-Trageblechs (STB) hindurch führt und zum freien Bereich hin mit der von der Stützer-Außenkontur (SAK) abgewandten Längsfläche (LFL) trapezförmig verjüngt ist,
1.4 der Stützer-Innenkontur (SIK) schließt sich ein quaderförmiger Hohlkörper (QHK) an, der im Bereich des Sammelschienenanschlusses (SSA) mit einem zur Längsrichtung desselben rechtwinklig angeordneten T-förmigen Anschlußhohlkörper (AHK) verbunden ist,
1.5 der T-förmige Anschlußhohlkörper (AHK) ist im entgegengesetzten Bereich des Sammelschienenanschlusses (SSA) mit einer die Kontur desselben überragenden Befestigungsplatte (BPL) ausgestattet,
1.6 der Sammelschienenanschluß (SSA) weist eine zur Längsrichtung des quaderförmigen Hohlkörpers (QHK) rechtwinklig angeordnete gradlinige Außenkontur (DAK) mit einer Zwei- bzw. Dreipunktbefestigung auf.

2. Metallgekapselte, luftisolierte Mittelspannungs-Schaltanlage nach Anspruch 1,
**gekennzeichnet durch** die Merkmale
2.1 die Stützer-Innenkontur (SIK) ist im Bereich des angrenzenden quaderförmigen Hohlkörpers (QHK) gegenüberliegend der Stützerführungskontur (SFK) mit einer Halbrundkontur (HRK) versehen,
2.2 die Halbrundkontur (HRK) ist mit einer trapezförmig ausgestalteten Stützeinrichtung (TSE) versehen, die annähernd höhengleich ist mit dem T-förmigen Anschlußhohlkörper (AHK),
2.3 die Stützer-Innenkontur (SIK) weist einen quer zur Längsrichtung des quaderförmigen Hohlkörpers (QHK) in der Ebene des Stützer-Trageblechs (STB) angeordneten Befestigungswinkel (BFW) auf.

## Claims

1. Metal-clad, air-insulated medium-voltage switchgear assembly having a number of bushing-type insulators corresponding to the number of phases, and which bushing-type insulators have busbar connections and are detachably connected to a insulator mounting plate,
**characterized by** the following features
1.1 the bushing-type insulator (DFS) has a cuboid insulator external contour (SAK) to which a likewise cuboid insulator internal contour (SIK) is adjacent,
1.2 a insulator clamping slot (SKS) having a concentric cross-sectional contour is provided between the insulator external contour (SAK) and the insulator internal contour (SIK),
1.3 the insulator internal contour (SIK) has, in the contact region with the insulator mounting plate (STB), a insulator guide contour (SFK) which passes through a recess in the insulator mounting plate (STB) and whose longitudinal surface (SFL) faces away from the insulator external contour (LAK) tapers trapezoidally towards the free region,
1.4 the insulator internal contour (SIK) is adjacent to a cuboid hollow body (QHK) which is connected in the region of the busbar connection (SSA) to a T-shaped hollow connection body (AHK) arranged at right angles to the longitudinal direction of the said busbar connection,
1.5 the T-shaped hollow connection body (AHK) is equipped in the opposite region of the busbar connection (SSA) with an attachment plate (BPL) which overhangs the contour of said hollow body (QHK),
1.6 the busbar connection (SSA) has a straight external contour (DAK), which is arranged at right angles to the longitudinal direction of the cuboid hollow body (QHK) and has a two- or three-point attachment.

2. Metal-clad, air-insulated, medium-voltage switchgear assembly according to Claim 1,
**characterized by** the following features:
2.1 the insulator internal contour (SIK) is provided with a half-round contour (HRK) in the region of the adjacent cuboid hollow body (QHK) opposite the insulator guide contour (SFK),
2.2 the half-round contour (HRK) is provided with a supporting device (TSE) of trapezoidal design and of approximately the same height as the T-shaped hollow connection body (AHK),
2.3 the insulator internal contour (SIK) has an attachment bracket (BFW) which is arranged transversely with respect to the longitudinal direction of the cuboid hollow body (QHK), in the plane of the insulator mounting plate (STB).

## Revendications

1. Installation de distribution en moyenne tension à blindage métallique et à isolation par de l'air, ayant un nombre de supports de traversée correspondant au nombre de phases et ayant des bornes de barre collectrice, les supports de traversée étant reliés de manière amovible à une tôle porte-support,
**caractérisée par** les caractéristiques
1.1 le support (DFS) de traversée a un contour (SAK) extérieur parallélépipédique auquel se raccorde un contour (SIK) intérieur également parallélépipédique,
1.2 il est prévu entre le contour (SAK) extérieur du support et le contour (SIK) intérieur du support une fente (SKS) de serrage de support à contour de section transversale concentrique,
1.3 le contour (SIK) intérieur de support comporte dans la région de contact avec la tôle (STB) porte-support un contour (SFK) de guidage de support qui passe dans un évidement de la tôle (STB) porte-support et qui se rétrécit en forme de trapèze vers la zone libre par la surface (LFL) longitudinale éloignée du contour (SAK) extérieur de support,
1.4 au contour (SIK) intérieur de support fait suite un corps (QHK) creux parallélépipédique qui est relié dans la région de la borne (SSA) de barre collectrice à un corps (AHK) creux de raccordement en forme de T, disposé à angle droit par rapport à la direction longitudinale du corps (QHK) creux,
1.5 le corps (AHK) creux de raccordement en forme de T est muni dans la région opposée de la borne (SSA) de barre collectrice d'une plaque (BPL) de fixation dépassant du contour du corps (AHK),
1.6 la borne (SSA) de barre collectrice a un contour (DAK) extérieur linéaire disposé perpendiculairement à l'axe longitudinale du corps (QHK) creux parallélépipédique et ayant deux ou trois points de fixation.

2. Installation de distribution en moyenne tension à blindage métallique et à isolation par de l'air suivant la revendication 1,
**caractérisée par** les caractéristiques
2.1 le contour (SIK) intérieur de support est muni dans la région du corps (QHK) creux parallélépipédique adjacent en regard du contour (SFK) de guidage du support d'un contour (HRK) hémicirculaire,
2.2 le contour (HRK) hémicirculaire est muni d'un dispositif (TSE) d'appui en forme de trapèze, qui est sensiblement au même niveau que le corps (AHK) creux de raccordement en forme de T,
2.3 le contour (SIK) intérieur de support comporte une équerre (BFW) de fixation disposée transversalement à la direction longitudinale du corps (QHK) parallélépipédique dans le plan de la tôle (STB) porte-support.
